Europäisches Patentamt

European Patent Office

Office européen des brevets

(19)

(11) Veröffentlichungsnummer : **0 163 143 B2**

# (12) NEUE EUROPÄISCHE PATENTSCHRIFT

(45) Veröffentlichungstag der neuen Patentschrift :
07.08.91 Patentblatt 91/32

(51) Int. Cl.$^5$ : **C04B 35/48**

(21) Anmeldenummer : **85105152.4**

(22) Anmeldetag : **26.04.85**

(54) Hochfester und temperaturbeständiger Formkörper aus Zirkoniumdioxid (ZrO2) und Verfahren zu seiner Herstellung.

(30) Priorität : 27.04.84 DE 3415803

(43) Veröffentlichungstag der Anmeldung :
04.12.85 Patentblatt 85/49

(45) Bekanntmachung des Hinweises auf die
Patenterteilung :
21.10.87 Patentblatt 87/43

(45) Bekanntmachung des Hinweises auf die
Entscheidung über den Einspruch :
07.08.91 Patentblatt 91/32

(84) Benannte Vertragsstaaten :
AT BE CH DE FR GB IT LI LU NL SE

(56) Entgegenhaltungen :
EP-A- 0 036 786
EP-A- 0 106 739
EP-A- 0 129 188
DE-A- 2 810 134
DE-A- 3 230 216
JP 79/34309 (mit engl. Uebersetzung)
A. H. Heuer, M. Rühle, Science and Technology of Zirconia II Advances in ceramics, Vol.
12 (1984), S. 1-13.

(73) Patentinhaber : **Max-Planck-Gesellschaft zur
Förderung der Wissenschaften e.V.
Bunsenstrasse 10
W-3400 Göttingen (DE)**

(72) Erfinder : **Claussen, Nils, Dr.
Forchenweg 24
W-7250 Leonberg 7 (DE)**
Erfinder : **Schubert, Helmut
Gartenstrasse 28
W-7250 Leonberg 7 (DE)**
Erfinder : **Rühle, Manfred
Aspergstrasse 21
W-7257 Ditzingen (DE)**
Erfinder : **Petzow, Günter
Tannenweg 7
W-7022 Leinfelden-Echterdingen 1 (DE)**

(74) Vertreter : **Weickmann, Heinrich, Dipl.-Ing. et
al**
**Patentanwälte Dipl.-Ing. H.Weickmann
Dipl.-Phys.Dr. K.Fincke Dipl.-Ing.
F.A.Weickmann Dipl.-Chem. B. Huber Dr.-Ing.
H. Liska Dipl.-Phys.Dr. J. Prechtel Postfach
860820
W-8000 München 86 (DE)**

EP 0 163 143 B2

**Beschreibung**

Teilstabilisiertes Zirkoniumoxid (PSZ = Partially Stabilized Zirconia) ist seit langem als hochfeste Oxidkeramik mit guten Verschleißeigenschaften und hoher chemischer Stabilität bekannt (z. B. Stuhrhahn et al., Ber. Dt. Ker. Ges. 52 (1975) 59 und R. C. Garvie et al., Nature 258 (1975) 703). Als teilstabilisierende Oxidzusätze werden im allgemeinen MgO, CaO, $Y_2O_3$ und eine Reihe von Seltenerdoxiden verwendet. In der PCT-OS PCT/AY/83/00 (R. R. Hughan et al.,) wird eine Art Übersicht über die Herstellungsweise von insbesondere MgO-teilstabilisiertem $ZrO_2$ (Mg-PSZ) gegeben (s. a. R. C. Garvie, US-Patent 4279655). CaO-PSZ ist u. a. in der australischen Ammeldung No. 85680/75 (1979) beschrieben. Eine weitere ausführliche Übersicht über diese Werkstoffklasse ist in dem Buch Science and Technology of Zirconia, Advances in Ceramics, Vol. 3 (1981) und in dem Mitte 1984 erscheinenden zweiten Band dieser Konferenzserie, Science and Technology of ZIRCONIA II, Advences in Ceramics, Vol. 11 (1984) gegeben.

Alle sogenannten PSZ-Keramiken leiden unter dem Nachteil einer relativ großen Korngröße (Korngrößen zwischen 50 und 100 µm sind üblich). Dies hat zur Folge, daß trotz der verfestigenden, in den kubischen Körnern ausgeschiedenen tetragonalen Phase die Festigkeit im Vergleich zu den extrem feinkörnigen TZP-Keramiken (TZP : tetragonal zirconia polycrystals, Korngröße 0,1 bis 2 µm) gering ist (dazu siehe z. B. M. Rühle, N. Claussen und A. H. Heuer, Advances in Ceramics, Vol. 11 (1984) oder M. Matsui et al., Am. Ceram. Soc. 17 (1982) 427). Die große Korngröße in den Mg- bzw. Ca-PSZ-Keramiken ist dadurch bedingt, daß nur bei hohen Temperaturen (1 700 °C) bei einem relativ geringen Stabilisatorzusatz (z. B. 8 Mol-% CaO oder MgO) im kubischen Einphasengebiet gesintert bzw. lösungsgeglüht werden kann. Üblicherweise wird nach der Sinterung in einem Anlaßprozeß bei Temperaturen zwischen 1 100 °C (siehe u. a. M. V. Swain et al., J. Am. Ceram. Soc. 66 (1983) 358) und 1 420 °C (siehe u. a. D. L. Porter und A. H. Heuer, J. Am. Ceram. Soc. 62 (1979) 298), die für die Erhöhung des Bruchwiderstands notwendige tetragonale Phase ausgeschieden.

Als Alternative zu den PSZ-Keramiken wurden TZP-Keramiken entwickelt, die aufgrund ihrer sehr geringen Korngröße Festigkeiten von > 1 000 Mpa erreichen. Sie weisen den großen Nachteil auf, daß die durch 3 bis 4 Mol-% $Y_2O_3$ (bzw. andere Seltenerdoxide) stabilisierte tetragonale Gitterform in wäßrigen Lösungen, feuchter Luft und anderen dampfhaltigen Atmosphären bei Temperaturen zwischen 200 und 500 °C von der Probenoberfläche her destabilisiert wird, wodurch die Festigkeit drastisch herabgesetzt wird. Eine gewisse Abhilfe kann hier zwar gemäß einem älteren Vorschlag (EP-A-129 188) durch eine höher stabilisierte Schutzschicht erzielt werden, doch bleibt die tetragonale (bei tiefen Temperaturen metastabile) Kornform in wäßrigen oder feuchten Atmosphären anfälliger als das kubische Korngefüge der PSZ-Keramiken.

Es ist an sich bekannt, daß Zweitphasenzusätze das Kornwaschstum behindern bzw. reduzieren können (z. B. 0,1 bis 1 % MgO in $Al_2O_3$). Derartige Versuche bei PSZ-Keramiken sind bisher jedoch aufgrund der hohen Sintertemperaturen gescheitert. In der DE-OS 28 101 314 wird zwar der Zusatz von $Al_2O_3$ und anderer $Al_2O_3$-Verbindungen zu kubisch vollstabilisiertem $ZrO_2$ für Festkörperelektrolyten beschrieben, wobei eine gewisse Kornfeinung erzielbar sein soll. Korngrößen und die damit Korrelierbaren Festigkeiten werden jedoch nicht angegeben bzw. wurden nicht gemessen. Der in dieser Anmeldung angegebene hohe Volumenanteil von $Al_2O_3$ (8 bis 85 %) würde außerdem den Bruchwiderstand ($K_{Ic}$) der PSZ-Keramiken verringern. Ein derart $Al_2O_3$-reiches $ZrO_2$ würde damit nicht mehr unter die PSZ-Keramiken, sondern eher unter die z. B. in der DE-OS 25 49 652 beschriebenen $Al_2O_3ZrO_2$ ($ZrO_2$-verstärktes $Al_2O_3$) fallen.

Der Erfindung liegt daher die Aufgabe zugrunde, die oben geschilderten Nachteile der bekannten Seltenerdoxid-haltigen Keramischen Formkörper auf Basis von Zirkoniumdioxid zu beseitigen und derartige Formkörper zu schaffen, welche feinköniger als die PSZ-Keramiken sind, andererseits aber auch gegenüber. TZP-Keramiken eine verbesserte thermische Stabilität im Bereich von 200 bis 500 °C in feuchter Umgebung und verbesserte Hochtemperaturfestigkeit aufweisen.

Gelöst wird diese Aufgabe erfindungsgemäß durch einen feinkörnigen keramischen Formkörper aus 0,5 bis 4 Mol-% Seltenerdoxid und 0,5 bis 7 Mol-% MgO enthaltendem $ZrO_2$, welcher dadurch gekennzeichnet ist, daß seine kubischen Körner (Kristallite) von Mg-Al-Spinellteilchen ($MgAl_2O_4$) überzogen sind. Die Korngröße liegt zwischen 1 und 15 µm. Die Spinellteilchen entstehen während des Sinterprozesses durch Reaktion von MgO mit 0,1 bis 5 Vol.-% $Al_2O_3$ im $ZrO_2$-Pulver. Als Seltenerdoxid (SE-Oxid) wird $Y_2O_3$ bevorzugt. Es kann ganz oder teilweise auch durch andere als Stabilisierungsmittel bekannte Oxide wie $CeO_2$, $Gd_2O_3$, $La_2O_3$ ersetzt werden.

Der Erfindung liegen Versuche zugrunde, die Oberfläche von 3Y-TZP-Keramiken (TZP mit 3 Mol-% $Y_2O_3$) mit einer MgO-reichen Schicht zu stabilisieren. Hierbei wurde überraschenderweise gefunden, daß bei der Eindiffusion von MgO in einen 3Y-TZP-Grünling an den TZP-Korngrenzen $MgAl_2O_4$ (Spinell)-Teilchen gebildet werden, die das Kornwachstum der während dieser Wärmebehandlung (ca. 1 500 °C an Luft) entstehenden MgO- und $Y_2O_3$-haltigen $ZrO_2$-Keramik behindern und eine stark verzahnte Korngrenzenform zur Folge haben. Die weitere Untersuchung ergab, daß das für die TZP-Keramik

verwendete $ZrO_2$-Pulver geringere Mengen an $Al_2O_3$ (1 Vol.-%) vom Aufbereitungsprozeß her enthielt, das wiederum mit dem eindiffundierenden MgO zu Mg-Spinell reagierte. Elektronenmikroskopische Untersuchungen (STEM) zeigten, daß es sich um fast stochiometrishe Spinellteilchen mit ca. 0,1 μm Durchmesser, handelte.

Das erfindungsgemäße Verfahren zur Herstellung des oben definierten neuen Formkörpers ist daher dadurch gekennzeichnet, daß ein mit Seltenerdoxid, insbesondere mit $Y_2O_3$, legiertes $ZrO_2$-Pulver, das 0,1 bis 5 Vol.-% $Al_2O_3$ enthält, verpreßt und in Gegenwart von MgO bei Temperaturen zwischen 1 400 und 1 600 °C, vorzugsweise um etwa 1 500 °C, gesintert und gegebenenfalls anschließend bei Temperaturen zwischen 1 200 und 1 350 °C angelassen wird. Die $Al_2O_3$-Menge liegt, vorzugsweise zwischen 0,1 und 2 Vol.-%.

Das Sintern in Gegenwart von MgO kann erfolgen, indem man dem $ZrO_2$-Pulver MgO zumischt. Alternativ kann in einer MgO-haltigen Atmosphäre gesintert werden.

Der $Al_2O_3$-Zusatz zum $ZrO_2$-Pulver kann beim Pulverherstellungsprozeß erfolgen, beispeilsweise durch Copräzipitation, oder auch bei der Pulveraufbereintung, beispeilweise durch den Abrieb von $Al_2O_3$-Mahlkörpern, mit denen das $ZrO_2$-Pulver feingemahlen wird.

MgO kann im Rahmen der Erfindung auch in Form von Verbindungen verwendet werden, die sich bei den anzuwendenden Sintertemperaturen unter Bildung von MgO zersetzen. Ein typisches Beispiel hierfür sind liecht zersetzliche Mg-Salze, insbesondere mit organischen Säuren wie z. B. Magnesiumacetat.

Die kritische Bedeutung der erfindungsgemäßen Verfahrensbedingungen zeigen folgende Versuche :
· 9 Mg-PSZ-Pulver ($ZrO_2$ mit 9 Mol-% MgO) wurde mit feinen Spinell- bzw. $Al_2O_3$-Teilchen versmischt und nach einer isostatischen Verdichtung im kubischen Einphasengebiet (~ 1 700 °C) gesintert Hierbei zeigte sich nur eine unwesentliche Kornwaschstumsbehinderung außerdem erfolgte eine Vergröberung der dispergierten Spinellteilchen. Versuche, bei denen reines $ZrO_2$-Pulver mit $Al_2O_3$ (< 2 Vol.-%) vermischt, gepreßt und in MgO-Pulver gesintert wurde fuhrten zu ähnlichen, wenig erfolgversprechenden Ergebnissen. Es mußte daher angenommen werden daß die Reduzierung der Sintertemperatur (von ~ 1 700 auf ~ 1 500 °C) beim ursprünglich vewendeten $Y_2O_3$-haltigen Pulver der entscheidende Grund für das Erzielen eines feinkörnigen PSZ-Materials war.

In weiteren Untersuchungen wurde wiederum mit 2 bis 3 Mol-% $Y_2O_3$ legiertes $ZrO_2$-Pulver mit geringen Mengen an $Al_2O_3$ (0,1 bis 2 Vol-%) versetzt und entweder mit MgO-Pulver (bzw. auch Mg-Acetatlösung) vermischt oder der Preßkörper in einer MgO-haltigen Atmosphäre (z. B. in MgO-haltigem Pulver) bei verschiedenen Temperaturen und Zeiten gesintert. Die Körper enthielten ausschließlich kubische Körner mit Korngrößen zwischen 1 und 15 μm mit stark verzahnten Korngrenzen. Die $MgAl_2O_4$-Teilchen waren sowohl innerhalb der Mg/Y-PSZ-Körner als auch an den Korngrenzen dispergiert. Eine Anlaßbehandlung bei ~ 1 300 °C an Luft führte zu den erwünschten tetragonalen Ausscheidungen innerhalb der Körner. Es wird angenommen, daß der $Y_2O_3$-haltige $ZrO_2$-Preßling anfänglich in dem tetragonalen Einsphasengebiet die TZP-übliche Feinkönigkeit und Dichte erreicht und während der weiteren Sinterzeit durch MgO-Aufnahme in einen kubischen Kristall umgewandelt wird, wobei entsprechend der vorhandenen $Al_2O_3$-Menge Spinellteilchen durch Reaktion mit dem MgO enstehen. Dadurch wird das auch bei TZP-Keramiken vorhandene Kornwachstum bei Sintertemperaturen > 1 500 °C stark limitiert. Während des Abkühlens bzw. nach Abkühlen und Wiederanlassen bei Temperaturen zwischen 1 100 und 1 400 °C können die sich aus der kubischen Phase ausscheidenden tetragonalen Teilchen optimiert, d. h. umwandlungsfähig, gemacht werden.

Die wesentlichen Vorteile der erfindungsgemäßen $ZrO_2$-Keramik gegenüber den herkömmlichen Mg-PSZ- bzw. Ca-PSZ-Keramiken und den tetragonalen Y-TZP-Keramiken sind folgende :

1. Infolge der feinen Korngröße (1-15 μm) ist die Festigkeit höher als die des grobkörnigen (50-100 μm) PSZ ; dies macht : sich insbesondere bei überschliffenen Proben bemerkbar.

2. Der $Y_2O_3$-Gehalt führt zu einer verbesserten thermischen Stabilität bei Temperaturen > 800 °C, bei denen konventionelles Mg-PSZ durch MgO-Diffusion bzw. -Verlust instabil wird.

3. Die Hochtemperaturfestigkeit ist gegenüber konventionellem PSZ einerseits infolge der an den Korngrenzen sitzenden Spinellteilchen und andererseits durch die ausgeprägte Korngrenzenverzahnung deutlich besser.

4. Gegenüber den hochfesten TZP-Keramiken besteht thermische Stabilität im Temperaturbereich 200 bis 500 °C in wäßrigen Lösungen, wasserhaltigen Atmosphären und Dämpfen.

5. Die tieferen Sintertemperaturen sind energietechnisch günstiger als die bei der konventionellen PSZ-Keramikherstellung notwendigen Temperaturen (etwa 1 500 °C statt ~ 1 700 °C).

Die erfindungsgemäßen Keramikkörper eignen sich aufgrund ihrer oben erläuterten Eigenschaften besonders als Konstruktionsteile für Wärmekraftmaschinen, als Knochenersatzwerkstoffe oder als Festkörperelektrolyte.

Die folgenden Beispeile erlautern die Erfindung weiter anhand von $ZrO_2$-Formkörpern, welchen als Seltenerdoxid $Y_2O_3$ zugesetzt wird. Jedoch kann, wie erwähnt, $Y_2O_3$ auch ganz oder teilweise durch andere Seltenerdoxide wie z. B. $CeO_2$, $Gd_2O_3$, $La_2O_3$ und dergleichen ersetzt werden.

## Beispiel 1

Isostatisch bei 600 MPa gepreßte Grünlinge aus durch Kofällung hergestelltem 2,2 Mol-% $Y_2O_3$-haltigem $ZrO_2$-Pulver mit 0,3 Gew.-% $Al_2O_3$ als Verunreinigung werden in einem Pulverbett aus MgO und $ZrO_2$ (in gleichen Mengen) bei 1 500 °C 3 Stunden gesintert und anschließend 5 Stunden bei 1 300 °C an Luft angelassen. Das Gefüge besteht danach aus stark ineinander verzahnten kubischen, 5 bis 10 µm großen Körnern, in denen und an deren Korngrenzen kleine (~ 0,1 µm) $MgAl_2O_4$-Teilchen gleichmäßig dispergiert sind. Die kubischen Körner enthalten tetragonale Ausscheidungen.

Die Festigkeit bei Raumtemperatur beträgt 810 MPa und bei 1 000 °C 470 MPa (3-Punkt-Auflage mit 20 mm Abstand). Der $K_{Ic}$-Faktor bei Raumtemperatur (Vickerseindruckverfahren) beträgt 12 MPa√m. Nach einem einstündigen Autoklavtest in 6 bar Wasserdampf bei 250 °C konnte kein monokliner Anteil im Oberflächenbereich festgestellt werden.

Ein in gleicher Weise hergestelltes, jedoch an Luft ohne MgO-Pulverbett gesintertes Material zeigte starke Oberflächenzersztzungen in den hier beschriebenen Autoklavtests.

## Beispiel 2

Ein durch Sprühreaktion hergestelltes 2 Mol-% $Y_2O_3$-haltiges $ZrO_2$-Pulver wurde mit $Al_2O_3$-Kugeln 4 Stunden attritiert, zu Formkörpern isostatisch verpreßt und wie im Beispiel 1 gesintert. Der Autoklavtest ergab ebenfalls keine Oberflächenzersetzung. Der Vickers-$K_{Ic}$-Faktor betrug 11 MPa√m.

## Beispiel 3

Einem kommerziellen 3 Mol-% $Y_2O_3$-haltigem $ZrO_2$-Pulver werden 5 Mol-% MgO-Pulver in einem Attritor mit $Al_2O_3$-Kugeln zugemischt (4 Stunden). Daraus isostatisch bei 600 MPa gepreßte Grünkörper werden 2 Stunden bei 1 550 °C an Luft gesintert. Das Gefüge enthält danach kubische Körner mit 2 bis 15 µm Durchmesser, die von Spinellpartikeln (0,3 bis 1 µm) umgeben sind. Nach einem Anlaßglühen bei 1 280 °C für 6 Stunden bildeten sich tetragonale Ausscheidungen. Der $K_{Ic}$-Faktor betrug 10,5 MPa√m ; der im Beispeil 1 beschriebene Autoklavtest ergab keine Veränderung der Probenoberfläche.

## Beispiel 4

Ein sprühreagiertes 2 Mol-% $Y_2O_3$- und 2 Mol-% MgO-haltiges $ZrO_2$-Pulver wird 4 Stunden mit $Al_2O_3$-Kulgeln attritiert, bei 600 MPa isostatisch gepreßt und 2 Stunden bei 1 550 °C in einem 20 Mol-% MgO-haltigen $ZrO_2$-Pulve gesinter und anshließend bei 1 350 °C 4 Stunden an Luft angelassen. Der Autoklavtest aus Beispiel 1 führte zu keiner Oberflächenumwandlung in die monokline $ZrO_2$-Gitterform.

## Patentansprüche

1. Feinkörniger keramischer Formkörper aus 0,5 bis 4 Mol.-% Seltenerdoxid und 0,5 bis 7 Mol.-% MgO enthaltendem $ZrO_2$ , **dadurch gekennzeichnet**, daß er aus kubischen Körnern mit Korngrößen zwischen 1 und 15 µm besteht, die von MgAl-Spinellteilchen überzogen sind, und Al entsprechend zu der Ausgangswischung enthaltenen 0,1 bis 5 Vol.-% $Al_2O_3$ enthält. haltigen $ZrO_2$-Pulver $Al_2O_3$ entweder beim Pulverherstellungsprozeß oder bei der Pulveraufbereitung zusetzt.

2. Formkörper nach Anspruch 1, dadurch gekennzeichnet, daß er als Seltenerdoxid $Y_2O_3$ enthält, das ganz oder teilweise durch $CeO_2$, $Gd_2O_3$, $La_2O_3$ ersetzt werden kann.

3. Verfahren zur Herstellung des Formkörpers nach Anspruch 1, dadurch gekennzeichnet, daß ein mit Seltenerdoxid, insbesondere mit $Y_2O_3$ legiertes $ZrO_2$-Pulver, das 0,1-5 Vol % $Al_2O_3$ enthält, verpreßt und in Gegenwart von MgO bei Temperaturen zwischen 1 400 und 1 600 °C gesintert und gegebenenfalls anschließend bei Temperaturen zwischen 1 200 und 1 350 °C angelassen wird.

4. Verfahren nach Anspruch 3, dadurch gekennzeichnet, daß man MgO dem $ZrO_2$-Pulver zumischt.

5. Verfahren nach Anspruch 3, dadurch gekennzeichnet, daß man in einer MgO-haltigen Atmosphäre sintert.

6. Verfahren nach einem der Ansprüche 3 bis 5, dadurch gekennzeichnet, daß man bei etwa 1 500 °C sintert.

7. Verfahren nach einem der Anspruch 3 bis 6 dadurch gekennzeichnet, daß man dem SE-Oxid-haltigen $ZrO_2$-Pulver $Al_2O_3$ entweder beim Pulverherstellungsprozeß oder bei der Pulveraufbereitung zusetzt.

8. Verwendung des Keramikkörpers nach Anspruch 1 als Konstruktionsteil in Wärmekraftmaschinen, als Knochenersatzwerkstoff oder als Festkörperelektrolyt.

## Claims

1. Fine-grained ceramic formed body of $ZrO_2$ containing 0.5 to 4 mole % rare earth oxide and 0.5 to 7 mole % MgO, characterised in that it consists of cubic granules with grain sizes between 1 and 15 µm which are coated with Mg-Al spinel particles and contains Al corresponding to 0.1 to 5 vol.% $Al_2O_3$ contained in the starting mixture.

2. Formed body according to claim 1, characterised in that it contains $Y_2O_3$ as rare earth oxide which can be replaced wholly or partly by $CeO_2$, $Gd_2O_3$, $La_2O_3$.

3. Process for the production of the formed body according to claim 1, characterised in that a $ZrO_2$ powder alloyed with rare earth oxide, especially $Y_2O_3$, which contains 0.1 - 5 vol.% of $Al_2O_3$, is pressed and sintered in the presence of MgO at temperatures between 1400 and 1600°C. and optionally subsequently tempered at temperatures between 1200 and 1350°C.

4. Process according to claim 3, characterised in that one admixes MgO with the $ZrO_2$ powder.

5. Process according to claim 3, characterised in that one sinters in an MgO-containing atmosphere.

6. Process according to one of claims 3 to 5, characterised in that one sinters at about 1500°C.

7. Process according to one of claims 3 to 6, characterised in that one adds $Al_2O_3$ to the rare earth oxide-containing $ZrO_2$ powder either in the powder production process or in the working up of the powder.

8. Use of the ceramic body according to claim 1 as constructional parts in heat energy machines, as bone replacement material or as solid body electrolyte.

## Revendications

1. Corps moulé de céramique à grains fins constitué de $ZrO_2$ contenant 0,5 à 4 moles % d'oxyde de terres rares et 0,5 à 7 moles % de MgO, caractérisé en ce qu'il consiste en des grains cubiques d'une granulométrie située entre 1 et 15 μm qui sont revêtus de particules de spinelle MgAl et qui contient Al de façon correspondante aux 0,1 à 5 % en volume de $Al_2O_3$ contenus dans le mélange de départ.

2. Corps moule selon la revendication 1, caracterise en ce qu'il contient en tant qu'oxyde de terres rares $Y_2O_3$, qui peut être remplacé en tout ou partie par $CeO_2$, $Gd_2O_3$, $La_2O_3$

3. Procédé de préparation du corps moulé selon la revendication 1, caractérisé en ce qu'on comprime une poudre de $ZrO_2$ alliée avec un oxyde de terres rares, en particulier avec $Y_2O_3$, laquelle poudre de $ZrO_2$ contient 0,1 - 5 % en volume d'$Al_2O_3$, en ce que cette poudre est frittee à des températures comprises entre 1400 et 1600°C en présence de MgO et en ce qu'elle est recuite ensuite le cas échéant à des températures comprises entre 1200 et 1350°C.

4. Procédé suivant la revendication 3, caractérisé en ce qu'on ajoute du MgO à la poudre de $ZrO_2$.

5. Procédé suivant la revendication 3, caractérise en ce qu'on fritte dans une atmosphère contenant du MgO.

6. Procédé suivant l'une des revendications 3 à 5, caractérisé en ce qu'on fritte à environ 1500°C.

7. Procédé suivant l'une des revendications 3 à 6, caractérisé en ce qu'on ajoute de l'$Al_2O_3$ à la poudre de $ZrO_2$ contenant l'oxyde de terres rares (SE), soit lors de l'opération de préparation de la poudre, soit lors du traitement de la poudre.

8. Utilisation du corps céramique suivant la revendication 1 comme élément de construction dans des moteurs thermiques, comme matériau de remplacement des os ou comme électrolyte solide.